# FASCICULE DE BREVET EUROPEEN

(11) **EP 0 630 862 B1**
(45) Date de publication et mention de la délivrance du brevet: **14.05.1997**
(21) Numéro de dépôt: 94401299.6
(22) Date de dépôt: 09.06.1994
(51) Int. Cl.: C02F 3/12, C02F 3/10, C02F 3/30

(54) **Procédé de traitement biologique des eaux**
Verfahren zur biologischen Aufbereitung von Wasser
Process for biological treatment of water

(30) Priorité: 23.06.1993 FR 9307656
(43) Date de publication de la demande: 28.12.1994
(73) Titulaire: DEGREMONT, F-92508 Rueil-Malmaison Cédex (FR)
(72) Inventeur: Chudoba, Pavel, F-78230 Le Pecq (FR); Pannier, Michèle, F-78290 Croissy sur Seine (FR); Pujol, Roger, F-69007 Lyon (FR)
(74) Mandataire: Armengaud Ainé, Alain

(56) Documents cités:
- WO-A-92/19548
- FR-A- 2 464 996
- DATABASE WPI Week 9307, Derwent Publications Ltd., London, GB; AN 93-054913 & JP-A-5 004 093 (TSUTSUMI SEISAKUSHO K. K.) 14 Janvier 1993 'TREATMENT OF ORGANIC POLLUTED WATER USING BACTERIA ADSORBING SUPPORTS OF BEDS OF FINE POWDER ETC.'
- PATENT ABSTRACTS OF JAPAN vol. 16, no. 584 (C-1013) 24 Décembre 1992 & JP-A-04 235 793 (SHIKOKU CHEM. CORP.) 24 Août 1992
- "Biological Fluidised Bed Treatment of Water and Wastewater", Cooper et Atkinson, WRC, Ellis Horwood Ltd.
- "Biological fluidized-bed treatment for BOD and nitrogen removal", J. S. Jeris et al., Journal WPCF, May 1977
- "Complete treatment of sewage in a two-fluidised bed system", P.F. Cooper, D.H.V. Wheeldon, Water Research Centre, Stevenage Lab.
- "Effluent treatment", P.F. Cooper, The Chemical Engineer, Aug./Sept. 1981
- "Complete Treatment of Sewage in a Two-Stage Fluidized-Bed System, Part 1"; P.F.Cooper, Wat. Pollut. Control, 1982
- "Two-stage biological fluidized bed treatment of coke plant wastewater for nitrogen control", S.G.Nutt et al., Journal WPCF, Vol. 56, No. 7., 1984
- "Study of biofilm and fluidization of bioparticles in a three-phase liquid-fluidized-bed reactor", F. Trinet et al., Wat. Sci. Tech., Vol. 23, 1991

## Description

La présente invention est relative à un procédé de traitement biologique des eaux.

On sait que les procédés récents de traitement des eaux font de plus en plus appel aux cultures fixées. Lorsque la biomasse est fixée sur un matériau support, ceci permet d'accroître sa concentration par unité de volume de l'installation de traitement biologique. Ainsi, les réactions biologiques et le transfert de masse s'effectuent en général avec des cinétiques plus rapides.

On sait par ailleurs que l'activité de la biomasse joue un rôle essentiel dans le processus de biodégradation. On utilise de plus en plus souvent en tant que matériau support, des matériaux granulaires qui sont mis en expansion, mouvement, turbulence ou en fluidisation, dans des réacteurs à lit dit mobile, de préférence en milieu triphasique (gaz-eau-particules). Ainsi WO92/19548 décrit un réacteur biologique de nitrification/dénitrification pour le traitement des eaux usées mettant en oeuvre un support de biomasse constitué par des particules poreuses, notamment d'argiles cuite broyée, d'une granulomètrie moyenne de 200 µm et d'une densité spécifique comprise entre 1 700 et 3 000 kg/m³. Le réacteur comporte une recirculation interne des particules.

On sait également que les mouvements des particules provoquent des collisions plus ou moins fréquentes et brutales entre les bulles de gaz et lesdites particules. Ces collisions contribuent fortement à un meilleur contrôle d'un biofilm mince et actif sur la surface des bioparticules (forces d'attrition et de cisaillement). Dans la mise en oeuvre de certains procédés un système de séparation matériau-support/biomasse, extérieur est nécessaire.

La surface du matériau support disponible pour la fixation de la biomasse étant l'élément déterminant l'efficacité du procédé, ceci impose soit la sélection d'un matériau fin (apportant donc une surface élevée) soit l'utilisation d'un matériau plus grossier qui impose alors un taux de remplissage du réacteur biologique plus élevé.

L'inconvénient lié à l'utilisation d'un matériau fin réside dans le risque de perte de ce matériau par lessivage lors du fonctionnement du réacteur. La mise en oeuvre d'un matériau support plus grossier, entrainant un taux de remplissage élevé du réacteur entraîne des contraintes hydrodynamiques liées notamment au transfert d'oxygène réduit, et une consommation énergétique élevée. Malgré ces inconvénients les procédés de traitement biologique des eaux mettent le plus souvent en oeuvre un matériau grossier en tant que matériau support de la biomasse, ce matériau présentant alors des caractéristiques granulométriques bien définies.

La présente invention se propose d'apporter un procédé de traitement biologique des eaux mettant en oeuvre un matériau support de biomasse de faible granulométrie, ce procédé assurant une autosélection du matériau support dans le processus biologique du traitement des eaux.

Cette invention a donc pour objet un procédé tel que defini dans la revendication 1.

Selon une caractéristique de la présente invention, ledit matériau poudreux consommable présente une surface disponible de l'ordre de 800 à 5000 m2/m3.

Selon la présente invention, ladite injection de matériau poudreux consommable peut être continue ou discontinue.

Ainsi qu'on le comprend, le procédé suivant l'invention, consiste donc en une injection, continue ou discontinue d'un matériau granulaire fin dans un réacteur biologique approprié contenant une culture de microorganismes (inoculum). Le réacteur biologique est alimenté par l'eau à traiter, l'apport d'air étant assuré par un dispositif d'aération à fines/moyennes bulles. En milieu anoxie (traitement de dénitrification) ou anaérobie (traitement de déphosphatation), le dispositif d'aération est bien entendu supprimé. Le mouvement des fluides liquide et gazeux s'effectue à co-courant et dans le sens ascendant (selon des vitesses de gaz et de liquide définies). Le réacteur peut également comporter des moyens de brassage mécaniques (réacteur agité).

Le procédé objet de l'invention permet d'obtenir une pré-sélection de la granulométrie du matériau granulaire, adaptée pour fixer un biofilm mince et actif, très rapidement, en formant des bio-particules ; celles-ci constituant la quasi totalité de la biomasse dans le système, les conditions hydrodynamiques et les temps de séjour extrêmement courts ne permettant pas le développement d'une biomasse libre.

Les particules minérales les plus fines sont lessivées avec la biomasse, produite au cours de la réaction biologique dans le réacteur. Cette biomasse libérée résulte des collisions entre les particules elles-mêmes et les bulles de gaz. Il s'établit ainsi un état d'équilibre dans le système, au cours du temps, une partie du matériau granulaire fin étant évacué avec la biomasse produite, des apports périodiques de nouveau matériau permettant de conserver le taux de remplissage nécessaire du réacteur biologique. Ce processus se répète périodiquement en fonction du taux de remplissage désiré.

La quasi totalité de la biomasse (autotrophes + hétérotrophes) étant fixée sur les bioparticules, les échanges favorisés par le biofilm mince obtenu favorisent des cinétiques rapides et par conséquent des temps de séjour hydrauliques courts dans le réacteur.

Compte tenu de l'agitation énergique du milieu, le biofilm a tendance à ne pas grossir "statistiquement", car les phénomènes d'attrition et de cisaillement sont très importants. Toutefois, les particules peuvent, pour une raison ou pour une autre, s'adapter à ces conditions et par conséquent la croissance de la culture peut provoquer une augmentation de l'épaisseur du biofilm, conduisant à une augmentation du diamètre de la bioparticule et à une réduction consécutive de sa densité, ce qui a pour conséquence un lessivage de la bioparticule du système.

Les pertes sont compensées dans le procédé selon l'invention par les injections périodiques ou continues de matériau vierge et la formation rapide de ces bioparticules n'a aucune influence sur l'état d'équilibre précédemment établi. Autrement dit, même si la concentration des bioparticules dans le système fluctue autour d'une valeur établie, les rendements ne varient pas et restent très élevés.

Par ailleurs, le procédé selon l'invention permet très facilement d'ajuster le taux de remplissage en fonction de la température, éventuellement de la charge prévisible (zones à population variable, industries saisonnières, etc...) afin de compenser les variations des cinétiques et de conserver ainsi un rendement constant et maximal au procédé.

Ainsi, à partir d'un matériau poudreux consommable brut d'une granulométrie bien définie, dans une large gamme, une fraction appropriée offrant une large surface de fixation est sélectionnée et retenue par le procédé selon l'invention.

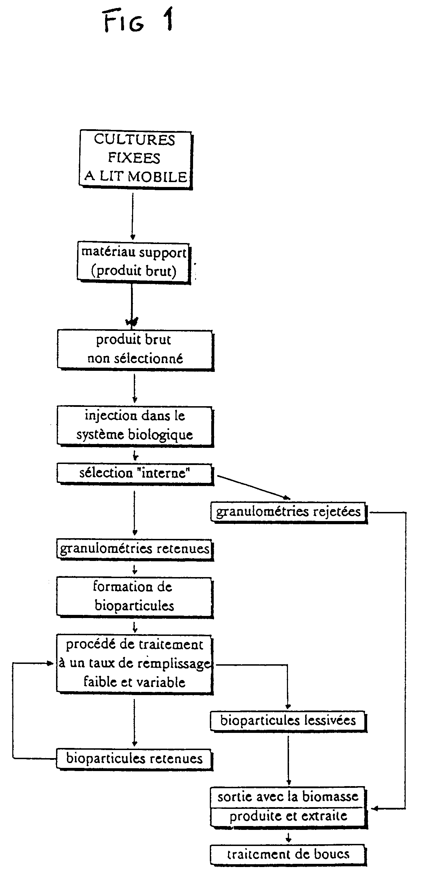

La figure 1 des dessins annexés est un schéma par blocs illustrant les différentes étapes du procédé selon la présente invention. Ce schéma est suffisamment explicite pour ne pas faire l'objet de commentaires supplémentaires.

Le choix du matériau poudreux consommable impose d'une part, une colonisation très rapide, par les microorganismes, de la fraction nouvellement injectée et d'autre part, un faible coût du produit brut utilisé.

Ainsi qu'on l'a déjà mentionné ci-dessus, ce matériau granulaire fin injecté dans le réacteur biologique est constitué par des déchets de kaolin.

Les caractéristiques devant être présentées par ce matériau sont indiquées ci-après :
. granulométrie faible (0 à 500 microns)
. densité > 1500 kg/m3
. taux de remplissage faible (inférieur à 5% vol.)
. surface disponible élevée (800 à 5000 m2/m3)
. rugosité importante du matériau
. "consommable", pertes admissibles, pouvant être remplacé

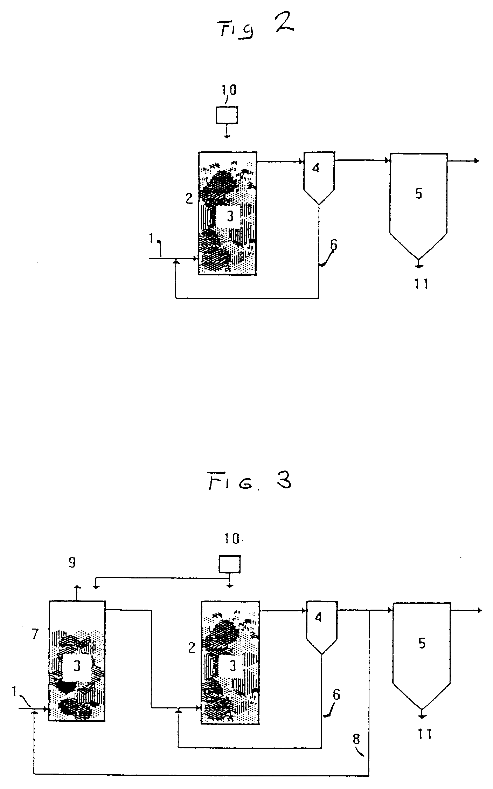

On décrira maintenant, à titre indicatif, et sans aucun caractère limitatif un exemple d'installation dans lequel peut être mis en oeuvre le procédé objet de l'invention. Cette description se réfère aux figures 2 et 3 des dessins annexés qui représentent respectivement une installation de traitement biologique des eaux comportant respectivement un réacteur triphasique (figure 2) et des réacteurs diphasique et triphasique (figure 3).

En se référant aux figures 2 et 3 on voit que le dispositif destiné à mettre en oeuvre le procédé selon l'invention comprend essentiellement un réacteur biologique à lit mobile soit triphasique 2 (nitrification-figure 2) soit un réacteur à lit mobile diphasique 7 (dénitrification) et un réacteur à lit mobile triphasique 2 (nitrification) selon l'exemple de réalisation illustré par la figure 3. Ce dispositif comporte en outre un séparateur 4 eau + boues/bioparticules et un clarificateur final 5, ou un flottateur.

L'eau à traiter 1 est pompée soit dans le réacteur 2 soit dans le réacteur 7, ou elle est mise en contact avec les bioparticules 3, en présence (réacteur triphasique 2) ou en l'absence (réacteur diphasique 7) d'air. Ces réacteurs 2 et 7 présentent un taux de remplissage très faible inférieur à 5 % en volume, contrairement aux procédés actuellement utilisés.

Après avoir été débarrassée de la pollution (C/N), l'eau est séparée des bioparticules dans le séparateur 4 qui peut être placé soit à l'intérieur, soit à l'extérieur du réacteur biologique. L'eau traitée contenant des matières en suspension, et notamment les fines particules de matériau support, est ensuite délivrée au clarificateur 5 dans lequel s'effectuent la clarification de l'eau et l'extraction des fines particules et de la biomasse produite. L'eau clarifiée est ensuite évacuée dans le milieu naturel.

Les bioparticules qui sont retenues dans le séparateur 4 sont recirculées en continu par une conduite de recirculation 6, dans le réacteur 2 pour un nouveau cycle de traitement. Un second circuit de recirculation 8 assure l'apport des nitrates en tête de l'installation dans le réacteur 7 de l'exemple de réalisation de la figure 3, où ils sont transformés par les bioparticules 3 en azote gazeux 9.

Selon l'invention les purges de particules éliminées systématiquement sont compensées par les injections périodiques du matériau vierge 10, soit dans le réacteur triphasique 2 (figure 2), et/ou dans le réacteur diphasique 7 (figure 3). L'extraction de la biomasse qui est produite lors du processus biologique s'effectue à partir du clarificateur final 5 par exemple à l'aide d'une vanne 11.

Les avantages apportés par le procédé objet de l'invention sont les suivants :
- sélection d'un matériau support des microorganismes adaptée à partir d'un produit brut présentant une large gamme granulométrique ;
- utilisation d'un matériau renouvelable et consommable à faible prix de revient de l'ordre de 50 à 100 fois inférieur aux matériaux traditionnellement utilisés dans de tels procédés de traitement biologique (sable, charbon actif, Biolite...) ;
- surface de fixation et d'échange élevée avec un faible taux de remplissage ;
- cinétiques élevées (jusqu'à 20 fois supérieures à celle de la boue activée) ;
- boue de bonne qualité en vue de son traitement (faible rapport, volume/concentration ; obtention de boues à forte concentration ce qui en améliore la qualité) ;
- flux massique élevé (jusqu'à 600 kg/m2/par heure) par rapport aux boues activées (5 à 10 kg/m2/par heure) ;
- large domaine d'application dans le traitement des eaux :
   . azote (nitrification tertiaire) : lit mobile triphasique 2 (figure 2) ;
   . carbone /azote (nitrification) : lit mobile triphasique ;
   . carbone /azote global (nitrification/dénitrification) : couplage des lits mobiles diphasique 7 et triphasique 2 (figure 3) ;
   . phosphore : si le système est couplé à une dénitrification et à une zone anaérobie.

Dans le tableau ci-après on a donné une comparaison des cinétiques du procédé selon l'invention avec d'autres procédés connus.

**Tableau**

| Procédé | Cinétique (valeur moyenne) (mg N/gMV.h) à 13-15 C° |
|---|---|
| Selon l'invention taux de remplissage 1,6 % | 10-20 |
| Boues activées | 1- 3 |
| Biofiltre | 4- 5 |
| Boues activées + culture fixée sur support solide | 4- 6 |
| Culture fixée air lift à taux de remplissage de 10 % | 3-14 |

Il demeure bien entendu que la présente invention n'est pas limitée aux exemples de mise en oeuvre ou de réalisation décrits et/ou représentés ici.

## Revendications

1. Procédé de traitement biologique des eaux mettant en oeuvre un réacteur biologique contenant une culture de micro-organismes, fixée sur un matériau granulaire support de biomasse selon lequel on injecte dans ledit réacteur un matériau support poudreux , consommable caractérisé en ce que ledit matériau poudreux est constitué de déchets de kaolin ayant une densité supérieure à 1 500 Kg/m^{3°} et il est injecté dans ledit réacteur sous forme brute non sélectionnée, dans une large gamme de granulométrie de O, à 500 µm et de préférence de 0 à 200 µm, avec un taux de remplissage du réacteur biologique par le matériau support inférieur à 5% en volume, pour assurer une auto-sélection et une auto-régulation de la granulometrie du matériau support.

2. Procédé selon la revendication 1 caractérisé en ce que ledit matériau poudreux consommable brut présente une surface disponible de l'ordre de 800 à 5000 m²/m^{3.}

3. Procédé selon l'une quelconque des revendications précédentes, caractérisé en ce que l'injection dudit matériau poudreux consommable s'effectue de façon continue.

4. Procédé selon l'une quelconque des revendications 1 ou 2, caractérisé en ce que l'injection dudit matériau poudreux consommable s'effectue de façon discontinue.

## Claims

1. Method for the biological treatment of water, using a biological reactor containing a microorganisms culture fixed on a granular support material for biomass, according to which a consumable, powdery support material is injected into said reactor, characterized in that said powdery material is constituted of kaolin waste having a density greater than 1500 kg/m³ and it is injected into said reactor in raw, non-selected form over a wide range of granulometry from 0 to 500 µm and preferably from 0 to 200 µm, with a proportion of less than 5% by volume of the biological reactor filled with the support material, so as to assure a self-selection and a self-regulation of the granulometry of the support material.

2. Method according to claim 1, characterized in that said consumable powdery material has an available surface of the order of 800 to 5000 m²/m³.

3. Method according to any one of the preceding claims, characterized in that the injection of said consumable powdery material takes place continuously.

4. Method according to any one of claims 1 or 2, characterized in that the injection of said consumable powdery material takes place intermittently.

## Patentansprüche

1. Verfahren zur biologischen Behandlung von Wasser, bei dem ein biologischer, eine Kultur von Mikroorganismen, die an ein granuläres Trägermaterial aus Biomasse gebunden sind, enthaltender Reaktor zum Einsatz kommt, und bei dem man in diesen Reaktor ein verbrauchbares, pulvriges Trägermaterial injiziert,
dadurch **gekennzeichnet**,
daß dieses pulvrige Material aus Kaolin-Abfällen mit einer Dichte über 1500 kg/m³ gebildet ist und daß es in diesen Reaktor in nicht-selektierter Rohform, mit einem Korngrößenbereich zwischen 0 und 500 µm, vorzugsweise zwischen 0 und 200 µm injiziert wird, wobei der Füllgrad des biologischen Reaktors für das Trägermaterial niedriger als 5 Vol.-% ist, um eine Autoselektion und eine Autoregulierung der Korngröße des Trägermaterials sicherzustellen.

2. Verfahren nach Anspruch 1,
dadurch **gekennzeichnet**,
daß das verbrauchbare, pulvrige Rohmaterial eine verfügbare Oberfläche im Bereich von 800 bis 5.000 m²/m³ aufweist.

3. Verfahren nach einem der vorhergehenden Ansprüche,
dadurch **gekennzeichnet**,
daß die Injektion des verbrauchbaren pulvrigen Materials kontinuierlich stattfindet.

4. Verfahren nach einem der Ansprüche 1 oder 2,
dadurch **gekennzeichnet**,
daß die Injektion des verbrauchbaren pulvrigen Materials diskontinuierlich stattfindet.
